# EUROPEAN PATENT SPECIFICATION

(11) **EP 0 649 106 B1**
(45) Date of publication and mention of the grant of the patent: **10.10.2001**
(21) Application number: 93308297.6
(22) Date of filing: 19.10.1993
(51) Int. Cl.: G06F 17/27

(54) **Compactly stored word groups**
Kompakt-gespeicherte Wortgruppen
Groupes de mots enregistrés d'une manière compacte

(43) Date of publication of application: 19.04.1995
(73) Proprietor: XEROX CORPORATION, Rochester, New York 14644 (US)
(72) Inventor: Kaplan, Ronald M., Palo Alto, California 94306 (US); Kay, Martin, Menlo Park, California 94025 (US)
(74) Representative: Grünecker, Kinkeldey, Stockmair & Schwanhäusser Anwaltssozietät

(56) References cited:
- EP-A- 0 494 573
- US-A- 4 742 481
- US-A- 4 799 188
- US-A- 4 807 905
- US-A- 5 007 019
- US-A- 5 056 021
- US-A- 5 151 857
- SOFTWARE - PRACTICE AND EXPERIENCE vol. 23, no. 1 , January 1993 , UK pages 15 - 30 C.L. LUCCHESI & T. KOWALTOWSKI 'Applications of Finite Automata Representing Large Vocabularies'
- IBM TECHNICAL DISCLOSURE BULLETIN. vol. 26, no. 11 , April 1984 , ARMONK, NY, US page 6094 K.W. BORGENDALE & R.G. CARLGREN 'Indirect reference synonym data storage technique'
- IBM TECHNICAL DISCLOSURE BULLETIN. vol. 35, no. 4B , September 1992 , ARMONK, NY, US pages 81 - 82 'Algorithms for disambiguating word-senses in thesauri'
- SIGPLAN NOTICES vol. 16, no. 6 , June 1981 , US pages 51 - 60 T.N. TURBA 'Checking for Spelling and Typographical Errors in Computer-Based Text'

## Description

The present invention relates to a product, an apparatus and a method of using word group data.

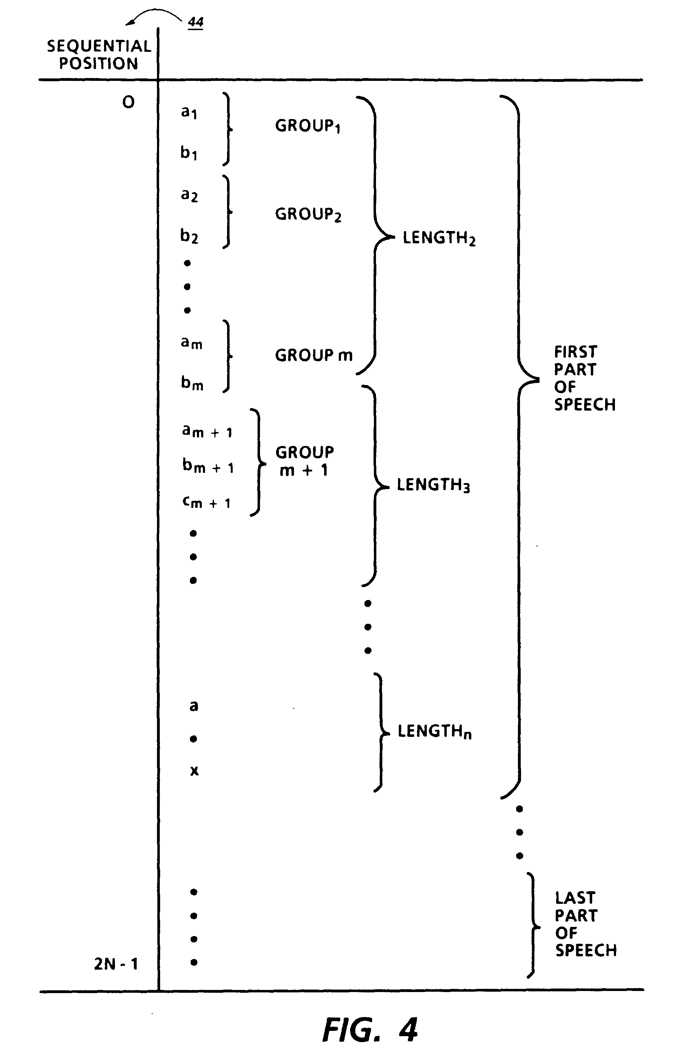

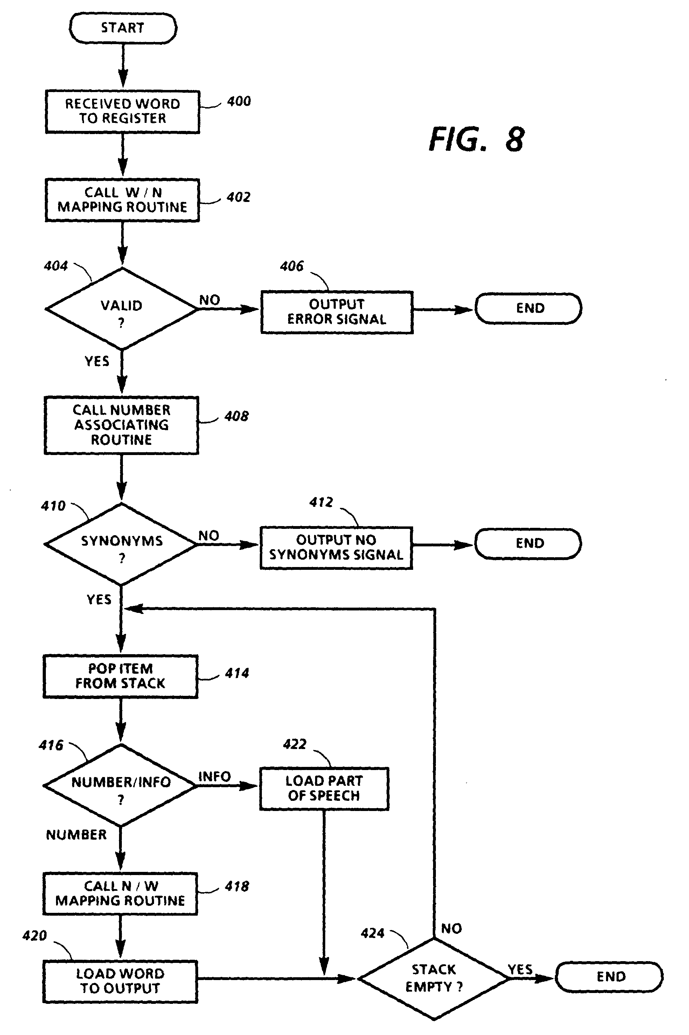

Lucchesi, C.L. and Kowaltowski, T., "Applications of Finite Automata Representing Large Vocabularies," *Software--Practice and Experience,* Vol. 23(1), January 1993, pp. 15-30, describe techniques for compressing a very large vocabulary of words into a minimal acyclic deterministic finite automaton, motivated by the problem of implementing an efficient spelling checker. Fig. 4 shows such an automaton for all forms of certain English verbs. Pages 26-27 describe minimal perfect hashing in relation to Figs. 8-10. The automaton includes, for each state, an integer that gives the number of words that would be accepted by the automaton starting from that state, and two simple functions implement a one-to-one correspondence between the integers 1 to L, where L is the number of words accepted by the automaton, and the words themselves. Pages 28-29 describe a thesaurus implemented with a numbered automaton with multiple initial states, each initial state corresponding to one grammatical category. Additional data structures represent the lists of words as sequences of numbers.

IBM TDB, Volume 35, No. 4B, September 1992, pages 81 to 82 discloses algorithms for disambiguating word-senses in thesauri. Dictionary-thesauri are described as consisting of alphabetically arranged discrete entries. Each entry consists of a headword, separated into senses, and each sense is followed by a list of its synonyms. Examples are given in which a headword W has senses W1 through Wn and a headword A has senses A1 through Am.

It is the object of the invention to provide a product, an apparatus and a method of using word group data capable of efficiently obtaining data indicating related words such as synonyms.

This object is solved by the subject matters of claims 1, 8 and 14.

Preferred embodiments are defined by the dependent claims.

The invention is based on the discovery of techniques that provide compact word group data with information about groups of words. Related words can be rapidly obtained using the word group data.

The invention is based on the recognition that the information necessary for storage and retrieval of synonyms or the like includes two distinguishable parts and that distinguishing these parts can improve efficiency. One part, referred to herein as relating information, is information that relates each word to other words. The other part, referred to as identifying information, identifies each word; each word may have a unique identifier.

This technique is further -based on the discovery of a very efficient way to store relating information for an electronic thesaurus or other device for obtaining related words. The relating information is equivalent to membership of each word in one or more groups of words. Therefore, identifiers of the words can be grouped in accordance with the relating information, making additional data indicating the relating information unnecessary. Related words can then be obtained by using an instance of a word to obtain that word's identifier; comparing the identifier to the grouped identifiers in the word group data; and, upon finding a group which includes a matching identifier, retrieving the identifiers in that group.

This technique can be implemented in a product that includes word group data. The word group data include word identifiers ordered into a sequence. The word group data also includes grouping data that indicate information about groups of identifiers in the sequence. Each group of identifier data items identifies a group of words. An identifier's position and the grouping data indicate a feature of the group that includes the word. The feature can be the position of identifiers of a group's members; a group's length or number of members; part of speech of a group's members; and other features distinguishing a group from other groups.

A product in accordance with the invention may further comprise a processor connected for accessing the word group data.

Further, the invention is based on the recognition that the grouping data can be a source of space inefficiency. This technique positions the identifiers within the sequence so as to reduce the amount of grouping data. More specifically, this technique positions the identifiers so that the information about each group can be determined algorithmically from the sequential position of the identifier of one of its members together with relatively few values from the grouping data.

This technique can be implemented by sorting the groups according to group length, the length of a group being the number of identifiers in it. The sequential position of an identifier can be used with grouping data values indicating the number of groups of each length to determine the length of the identifier's group and the positions of the group's first and last identifiers. This technique is efficient because it permits omission of data about the location and length of each group.

If each group represents a group of related words such as synonyms, this technique can be extended to omit data about the part of speech of each group. In this case, the groups are sorted by part of speech. The position of an identifier in the sequence and grouping data values indicating the positions of the first and last identifiers within each part of speech are then used to determine the part of speech of the group which includes the given identifier. The grouping data values could, for example, be the position of the last identifier of each part of speech, which would also indicate the position in the sequence of the first identifier of the next part of speech.

Furthermore, the invention is based on the recognition that each word identifier can be made very compact by identifying each word with a unique number from a dense set of numbers of fixed length. As a result, a relatively large number of words can be compactly represented, each word being identified by a binary number with a relatively small number of bits.

This technique can be implemented by including mapping data in a product that also includes word group data as described above. The mapping data can be used to map between each word and its identifier. The identifiers of the words in all the groups together form a dense set of numbers of fixed length.

Moreover, the invention is based on the recognition that the identifiers may be a source of inefficiency. If each identifier is a number, storing each number in an integral number of bytes may be inefficient, depending on the number of words represented. If so, the word group data may be made even more compact by storing each identifier in parts, at least one of which may be less than a full byte. If the full byte length is an integer multiple of the length of each part of an identifier, a comparison with each part can be made in a single machine cycle using shift and mask operations.

Furthermore, the invention is based on the recognition that the word group data is scanned to find an identifier, and scanning can be inefficient. This technique makes scanning the identifiers more time efficient by sorting each group by number and by sorting groups of equal length by the first number in each group. As a result, while scanning a group to find identifiers that match a candidate's identifier, if an identifier in the group exceeds the candidate's identifier, the remaining identifiers in the group can be skipped. Similarly, if the first identifier of a group exceeds the candidate's identifier, all the remaining groups of that length can be skipped, because none of their identifiers could match.

The techniques can also be implemented in methods that use word group data as described above. The sequence of identifiers can be searched with a word's identifier to find matching identifiers. When a match is found, the position of the matching identifier and the grouping data can be used to obtain data relating to a group that includes the word. Identifiers of other words in the group can be obtained, or data indicating the part of speech of words in the group can be obtained.

The methods can also include mapping. A word can be mapped to obtain its identifier, and the identifiers of words in a group can be mapped back to words to obtain, for example, synonyms.

The methods can also include comparing identifiers in parts. The methods can also include skipping identifiers that could not match and skipping groups of identifiers because none of their identifiers could match.

The techniques outlined above are advantageous because they permit efficient storage and retrieval of synonyms or the like, and are useful in an electronic thesaurus or other word associating device. Compactly stored synonyms can be rapidly searched to retrieve synonyms. For example, the techniques can be used to store thesaurus data more efficiently in a personal computer's resident memory, reducing disk-swapping and providing more rapid synonym retrieval.

By way of example only, embodiments of the invention will be described with reference to the accompanying drawings, in which:
Fig. 1 is a schematic block diagram showing the major functional components of an electronic thesaurus;
Fig. 2 is a flowchart showing a sequence of basic functions in the use of an electronic thesaurus;
Fig. 3 is a flowchart showing a method of producing a product that includes a list of groups of synonyms and tables with grouping data;
Fig. 4 is a schematic diagram of a list of groups of synonyms created according to the method of Fig. 3;
Fig. 5 is a flowchart showing a synonym retrieval routine including number to number association;
Fig. 6 is a flowchart showing in more detail some of the steps of Fig. 5;
Fig. 7 is a schematic diagram of a data processing system for thesaurus operations; and
Fig. 8 is a flowchart showing the main thesaurus routine of the system of Fig. 7.

### A. General Features

The term "thesaurus" often refers to a book of synonyms. A thesaurus thus enables a user to find synonyms of a given word. But, as in the above discussion, the term "thesaurus" is also used to refer to a function performed by an electronic device, such as a computer, which similarly provides synonyms of a given word to the user. In this latter sense, a thesaurus is but one example of a larger class of associating devices which, in response to any of a number of tokens, provides related tokens. A translator is another example of an associating device applicable to words, but such an associating device could also be used for types other than words, provided that the associating device has information associating each of a number of acceptable types with related acceptable types and provided that each token to be associated is an instance of one of the acceptable types.

The terms "token" and "type" are used herein in accordance with their usual meanings in linguistics. A token is thus a particular instance of an expression, symbol or sentence, while a type is the general form of the expression, symbol or sentence as contrasted with its particular instances. While the term "word", as used herein, refers to a type, the terms "instance of a word", "input word", "received word", "output word", "stored word" and the like refer to tokens. As used herein, the term "word" includes linguistic units that have meaning, and therefore is not limited only to single words, but includes strings of words, including phrases and clauses, and also includes ideographic symbols or symbols of any other kind, individually or in strings, that have meaning.

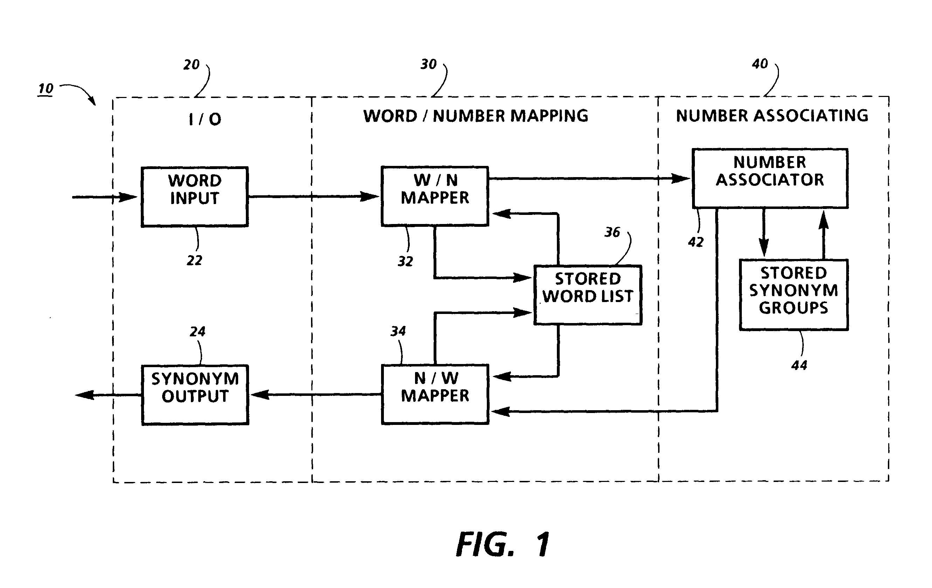

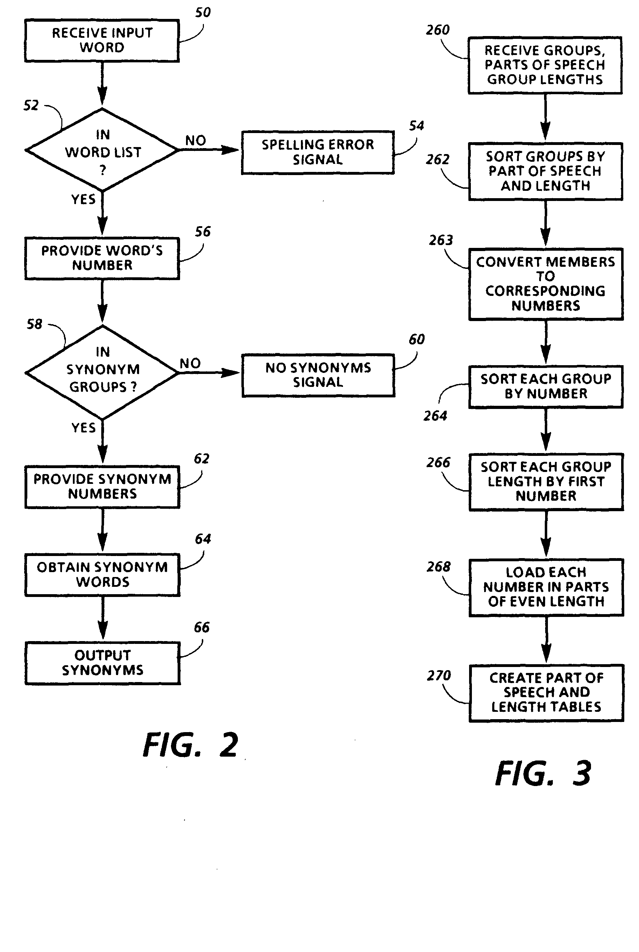

Fig. 1 illustrates an associating device that provides synonyms in response to an input word. Fig. 2 is a flowchart showing how an input word's synonyms may be retrieved.

Device 10 in Fig. 1 has three broad functional parts. I/O part 20 performs the input and output (I/O) functions. Specifically, word input 22 receives an input word from the user, and synonym output 24 provides the synonyms of that word to the user. I/O part 20 also provides the input words it receives in an appropriate digital form to word/number mapping part 30, and similarly receives the synonymous words output from mapping part 30. Mapping part 30 includes a word to number (W/N) mapper 32 and a number to word (N/W) mapper 34, each of which accesses stored word list 36. Number associating part 40 receives the output of mapper 32 and provides the input of mapper 34. Within it, number associator 42 receives an input number representing the input word from W/N mapper 32 and provides to N/W mapper 34 the output numbers representing that word's synonyms. Number associator 42 accesses stored synonym groups 44 to associate synonyms with the input word.

Fig. 2 shows the operation of device 10 in more detail. In box 50 an input word is received by word input 22 and provided to W/N mapper 32. In box 52, W/N mapper 32 accesses stored word list 36 to determine whether the input word is one of the acceptable words which word list 36 is capable of mapping. If not, a spelling error signal is provided in box 54 through conventional signaling means (not shown). But if the word is in stored word list 36, W/N mapper 32 obtains the word's number and provides it to number associator 42, in box 56. Number associator 42 similarly compares the input word's number with the numbers in synonym groups 44, looking for a match, in box 58. If the number does not match any of the grouped numbers, a no synonyms signal is provided in box 60, again through conventional signaling means (not shown). But if one or more matches occur, number associator 42 retrieves the numbers of the synonymous words from synonym groups 44 and provides them to N/W mapper 34, in box 62. N/W mapper 34 accesses stored word list 36 to obtain synonymous words using the retrieved numbers, in box 64. The synonymous words are then provided through synonym output 24 in box 66.

Figs. 1 and 2 illustrate the combination of using a received token such as an input word to obtain an identifier such as a number and then using the number to retrieve the identifiers of types related to the type of the received token from stored groups of identifiers. The retrieved identifiers may then be used to obtain tokens. The manner in which these features can be efficiently implemented is discussed in greater detail below.

The structure of device 10 includes three major parts which perform independent functions and therefore can be highly specialized for efficient operation. For example, stored word list 36 may contain skippable branches for very efficient W/N and N/W mapping. Similarly, synonym groups 44 may contain a compact series of uniform length numbers from a dense set of numbers, each number uniquely identifying a word. For further compactness, each number may be stored in parts, at least one of which may be less than a full byte in length. The full byte length is an integral multiple of the length of each part, permitting comparison of each part in a single machine cycle.

Because the mapping and associating functions are independent, the interfaces between the major parts may also be specialized for the types of data handled, since only words cross the interface between I/O part 20 and word/number mapping part 30, while only numbers cross the interface between word/number mapping part 30 and number associating part 40. Therefore, device 10 may be realized in many ways, depending on the speed and space efficiency which must be achieved and on the available components.

The components of I/O part 20 of device 10 in Fig. 1 may be any available components capable of providing the necessary input and output functions. For example, word input 22 may be a conventional keyboard, and synonym output 24 may be a conventional display. Both word input 22 and synonym output 24 may be handled through a conventional display-based user interface. Other I/O devices could be used, including speech or character recognition circuitry and speech generation circuitry.

Word/number mapping part 30 could be implemented with any components which perform the necessary mapping of words to numbers and back. For example, W/N mapper 32 and N/W mapper 34 may efficiently be implemented as software routines executed by a data processing system using a stored word list.

Number associating part 40 could similarly be implemented with any components which retrieve numbers related to an received number. As described above, it receives a number identifying an input word from word/number mapping part 30 and, in turn, provides the retrieved numbers of related words to word/number mapping part 30. In addition, number associating part 40 can provide information about the part of speech of each retrieved number, to assist a user in identifying the relevant synonyms. Implementation features of number associating part 40 are described below in relation to its components.

### B. Stored Groups

Relating information about groups of related types such as synonyms can be stored in various ways. For example, identifiers of the types can be stored in groups, each group containing data such as its length, location of its members and the relevant part of speech. Upon receiving a number identifying an input word, number associating part 40 could simply retrieve the stored numbers from all the groups containing that number, together with their parts of speech. The groups could be identified by searching for the received number or by retrieving a list identifying the groups that include the received number.

Stored synonym groups 44 have a number of features promoting efficiency. For compactness, the part of synonym groups 44 whose contents are compared includes only the numbers, with the relating information being determinable from the sequence of the numbers using compact tables. For further compactness, each number is stored in a number of parts, each of which has a length permitting single cycle access and comparison. For rapid scanning, the numbers in each group are sorted and the groups within each part of speech are sorted by first number, permitting the skipping of the remaining numbers in a group or the remaining groups in a part of speech.

Synonym groups 44 can thus be stored in a compact form which permits rapid scanning. Fig. 3 illustrates a technique for producing a product that includes stored synonym groups 44. Fig. 4 illustrates the structure of synonym groups 44.

The technique of Fig. 3 begins in box 260 by receiving the groups in a conventional form, in which each group ordinarily includes data identifying each member of that group and data explicitly indicating that group's length and part of speech. Many of the groups will have relatively few members, so that this additional data about each group's length and part of speech is a substantial part of the group. In order to eliminate this additional data, a sort is performed in box 262 which orders the groups into a sequence so that this information can be determined from the sequential position of any of the members of a group. This sort orders the groups according to part of speech and, within each part of speech, by group length.

When the groups have been sorted, the information identifying each group member is converted in box 263 into a compact identifier such as a number from a dense set of numbers. Even after this conversion is completed, however, it is necessary to keep the numbers in groups with additional data, to permit subsequent sorting and preparation of tables.

Additional sorts are performed to permit skipping of some of the members or some of the groups during searching. In box 264, each group is sorted numerically, so that the smallest number is first. Then, in box 266, the groups are sorted numerically according to the first number in each group. As a result, if the candidate number being compared is smaller than a number, it is also smaller than the subsequent numbers in the same group, and they can be skipped. And if the candidate number is smaller than the first number in a group, then it is smaller than all the subsequent numbers in all of the subsequent groups of that length for that part of speech, so that those groups can be skipped. These additional sorts facilitate faster searching.

When the numbers in each group and the groups themselves have been sorted in this manner, they are loaded in sequence onto a storage medium, in box 268. During this step, each group is taken in turn and tested to determine whether it has the same part of speech and length as the previous group. If it is a different part of speech, the sequential position of the last number of the previous group is temporarily stored for subsequent use in creating tables. Similarly, if it has a different length, the number of groups having the previous length is temporarily stored for use in table creation. Then the numbers in the group are loaded in sequence beginning at the next location on the storage medium.

The manner in which each number is loaded depends somewhat on the total number N of numbers in the synonym groups. A typical thesaurus, for example, may contain a total of 31,000 stored numbers, but only about half that many, or slightly less than 2¹⁴, unique numbers. To permit rapid comparison, each stored number could be loaded as two full bytes of eight bits each, so that each byte can be retrieved and compared with the same byte of a number from W/N mapper 32 in a minimal number of machine cycles.

For greater compactness each number could instead be divided into three parts, respectively eight bits, four bits and two bits in length, with the parts of each length being loaded in a respective array in the same overall sequence. Another technique is to load only the first number of each group in full and, for each subsequent number, to load only the difference between it and the previous number, which should ordinarily reduce the parts loaded for each number to two--one of eight bits and one of four bits, each in a respective array. Because the full byte length is an integral multiple of the length of each part in these techniques, the part lengths may be referred to as "even lengths". These techniques would eliminate two or four of every 16 bits in the synonym groups, although they also require one or two extra comparisons in some cases.

In either of these techniques, the arrays are loaded so that the addresses or array indexes of the parts of each stored number bear a given relationship to each other to facilitate retrieval. The full length array index could be shifted, for example, to obtain the shorter length array indexes, with bits of the index being masked to indicate which bits of the array entry at that index should be used for comparison. Using even lengths thus permits single cycle comparison, using a shift operation to find the appropriate part and a mask operation to compare it with the same part of a received number. The starting point or base of each array would be stored for use in accessing that array.

Fig. 4 shows the sequence of the numbers in synonym groups 44. At the highest level of organization, the groups are ordered by part of speech, from the first to the last part of speech. Within each part of speech, the groups are ordered by length, with no group being less than two numbers, so that the lengths range from Length₂ to Lengthₙ, where n is the longest length of any group. Within each length, the groups are ordered by their respective first numbers. For example, in Length₂, a₁ of Group₁ is smaller than a₂ of Group₂, and so forth through aₘ of Groupₘ. Similarly, a_{m + 1} is the smallest of the first numbers of Length₃. Finally, the numbers within each group are in order, so that number a is smaller than number b, which is in turn smaller than number c, and so forth.

Finally, when the numbers have all been loaded onto the storage medium, and the information for creating the tables has also been temporarily stored, the tables are created and loaded onto a storage medium, in box 270. Two tables can be created, for example, a part of speech location table and a group length table. The location table includes an ending location (Part End) for each part of speech, indicating the sequential positions of the last number of that part and of the first number of the next part. The group length table could include, for each part of speech, M values each indicating a number of groups (GroupNo) within that part of speech which have a given length. But if the lengths are sparse, each entry of the length table should include a length and a number of groups (GroupNo). The bases of both tables are stored for use in accessing them during associating.

The table contents are based on the previously stored information. As noted, the part end for each part of speech is the sequential position of the last number in the last group having that part of speech. The GroupNo of each length within a part is, of course, the number of groups of that length within that part of speech.

### C. Association

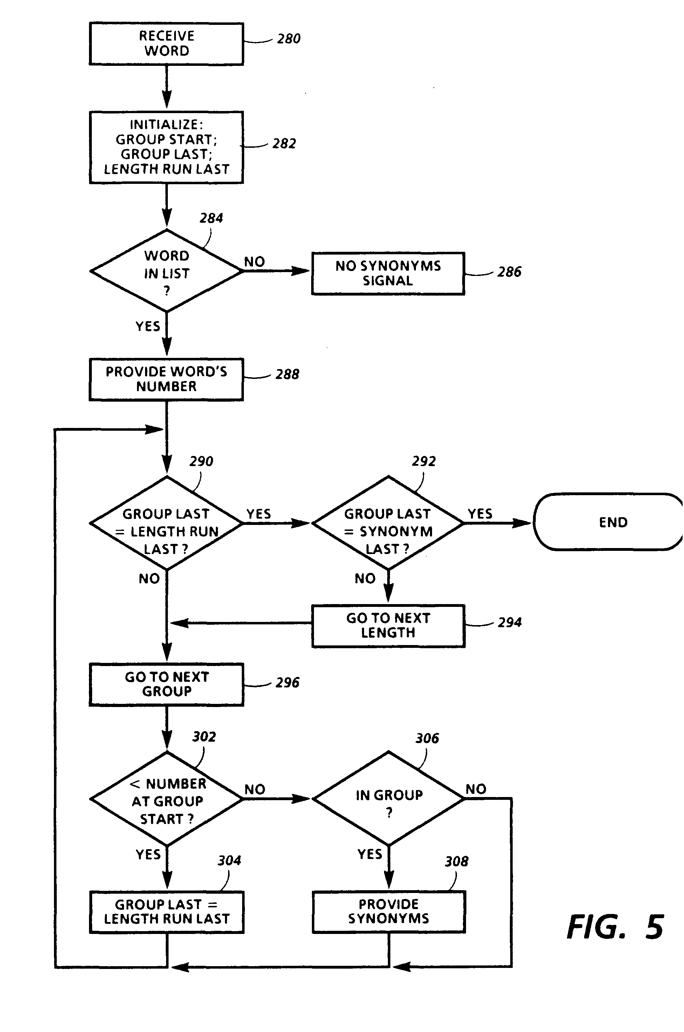

The manner in which number associator 42 operates depends primarily on the manner in which data about related words is stored. Fig. 5 shows a synonym retrieval routine which includes steps for associating numbers using stored synonym groups 44 in Fig. 4. Other techniques would be appropriate, of course, if the synonyms were stored in other arrangements.

The routine of Fig. 5 begins when a word is received, in box 280. Before proceeding with mapping and associating, the step in box 282 initializes a number of variables, including GroupStart, the first location of the current group; GroupLast, the last location of the current group; LengthRunLast, the last location of the last group of the current group length; and others, such as SynonymLast, the last location in the synonym groups. For the routine of Fig. 5, it is convenient to initialize GroupLast and LengthRunLast to - 1.

The stored word list used for the routine of Fig. 5 contains only those words which have synonyms in the stored synonym groups. Therefore, the test in box 284 determines not only whether the word received in box 280 is in the word list but also whether it is in the synonym groups, performing both the tests in boxes 52 and 58 in Fig. 2. If not, a no synonyms signal is provided in box 186, but if so, word's number is provided in box 288 as described above. This completes the operation of W/N mapper 32, and the operation of number associator 42 begins.

The test in box 290 determines whether the current value of GroupLast is equal to the current value of LengthRunLast. This will occur if the two variables are initialized to be equal, and also when the current group is the last group of this length. In either case, the test in box 292 then determines whether GroupLast is equal to SynonymLast, which would mean that all the stored synonym groups have been compared and the routine can end. If not, the routine goes to the next group length, meaning that the group length table is accessed to obtain the next length and the number of groups of that length. Those values are then used to determine the new value of LengthRunLast and other variables relating to the new group length, in box 294.

After the routine proceeds to a new group length, if necessary, the step in box 296 goes to the next group, which can be done by changing relevant variables, including setting GroupStart to one greater than GroupLast and increasing GroupLast by the current group length. Before the routine actually compares the received word's number to the members of the current group, the test in box 302 determines whether that number is less than the number at GroupStart. If so, the received word's number is less than all of the members of this group and of all the succeeding groups of the same length. Therefore, GroupLast is set to LengthRunLast in box 304 to ensure that the routine will go to the next group length.

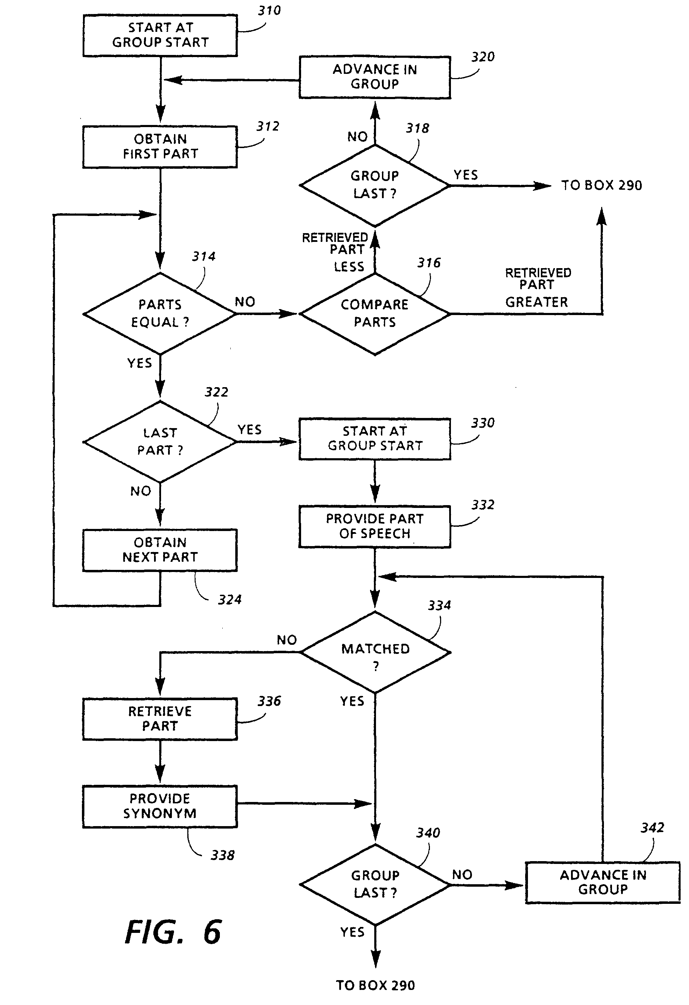

Finally, the test in box 306 determines whether the received word's number matches any of the members of the current group. If not, the routine returns to the test in box 290, but if so, the synonyms of the received word are provided in box 308. The steps in boxes 306 and 308 are described in more detail below in relation to Fig. 6, and it will be seen that they include operations of N/W mapper 34 as well as number associator 42.

The routine of Fig. 5 could be modified to permit the user to specify a part of speech as well as a word. If it were so modified, steps would be added to confine number association to the portion of the stored synonym groups for the selected part of speech. For example, SynonymLast could be set to the last location of that part of speech, based on the part of speech table, and GroupStart could be initialized to the first location of that part of speech.

Fig. 6 shows in more detail how steps 306 and 308 in Fig. 5 may be implemented. In general, the subroutine of Fig. 6 is appropriate where each number is loaded onto the storage medium in two or more parts, as described above in relation to Fig. 3.

The steps implementing box 306 begin with the step in box 310, in which the subroutine starts with the location GroupStart. The first part of the value at that location is retrieved in box 312. Then, in box 314, the retrieved part is compared with the same part of the received word's number. If the two are not equal, it is not necessary to retrieve any of the other parts, but part of the received word's number is compared with the retrieved part in box 316 to determine which is greater. If the retrieved part is greater, a match can no longer occur, so that the subroutine returns to box 290. If the retrieved part is less, and if the group has more members, a match could still occur, so that the test in box 318 next determines whether the subroutine has reached GroupLast. If so, the subroutine returns to box 290 in Fig. 5, ending the steps implementing box 306. Otherwise, the subroutine advances to the next member of the current group in box 320 and obtains its first part in box 312.

If the test in box 314 finds equality, the test in box 322 determines whether the current part is the last part of the numbers being compared. If not, the next part is retrieved in box 324, modifying the location being accessed as necessary to retrieve the next part. Then the test in box 314 is repeated.

When the test in box 322 indicates that the last part has been successfully compared, a match has been detected, and the test in box 306 in Fig. 5 is completed. The subroutine then proceeds to provide the synonyms from the current group, as in box 308. To do so, the subroutine again starts at GroupStart, in box 330. Based on the value at GroupStart, the step in box 332 determines the part of speech of the current group and provides it to be displayed. The test in box 334 determines whether this is the member of the group which matched the received word's number, which can be done by keeping a value representing the position of the matching member. If not, the parts of the member are retrieved in box 336, and N/W mapper 34 provides the synonym in box 338.

The test in box 340 then determines whether this member is at GroupLast, in which case the subroutine returns to the test in box 290 in Fig. 5. Otherwise, additional members of the group remain to be examined. The subroutine advances to the next member of the group in box 342 before returning to the test in box 334.

One timesaving variation of the routine in Figs. 5 and 6 would be to search stored synonym groups 44 in reverse order if the received number were greater than some predetermined value. Searching in reverse order is faster for high received numbers because a large number of groups whose members would be less than the received number could be skipped.

Another approach would be to divide the range of numbers into subranges at certain break values, dividing the groups into subgroups each containing the numbers in that group which fall in one of the subranges. The received number is compared with the break values to determine which set of subgroups should be searched. This reduces space because each number can be stored as an offset from the next lower break value. This space saving is partially offset, however, by an additional subgroup length table for each additional subgroup. If the numbers are stored in disk memory or other low speed storage, this technique makes it possible to confine the search to a part of the stored numbers. As a result the total number of data to be moved into high speed memory during search can be reduced, which can be advantageous.

Other techniques could also be used to adjust the speed of number associator 42. For example, a table could be used to obtain the starting location of each group containing a given input word. Or some data could be included in a group indicating the next group with any of the same members, so that if a matching number were found, the search could omit a number of subsequent groups.

To provide the synonyms in each group in alphabetical order, stored word list 36 can be created so that the numerical order of the numbers corresponds to alphabetical order.

The above implementation of number associator 42 thus receives a number from W/N mapper 32 and provides the numbers in all the groups which include that received number to N/W mapper 34.

### D. Thesaurus System

A thesaurus could be implemented in a number of ways. For example, the routines described above and the data necessary for their execution could be stored in the memory of a data processing system.

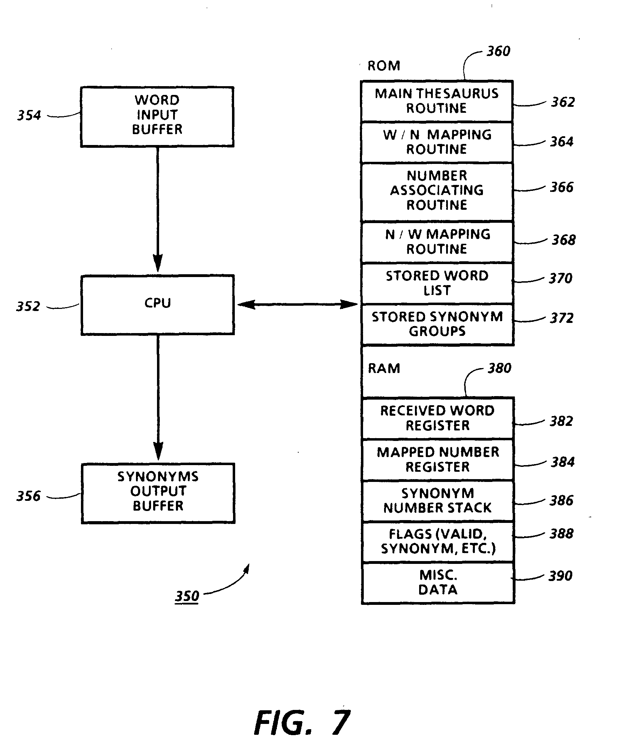

Fig. 7 shows such a thesaurus system 350 with CPU 352. An input word goes to CPU 352 through word input buffer 354, and the resulting synonyms and additional information, such as part of speech, are output through synonyms output buffer 356. During operation, CPU 352 executes routines stored in ROM 360, relevant ones of which are shown.

As CPU 352 executes main thesaurus routine 362, it calls a number of other routines, including W/N mapping routine 364, number associating routine 366, and N/W mapping routine 368, as discussed below in relation to Fig. 8. W/N mapping routine 364 and N/W mapping routine 368 access stored word list 370, while number associating routine 366 accesses stored synonym groups 372. These routines also store data temporarily in RAM 380.

Within RAM 380, received word register 382 stores the input word pending subsequent operations. Mapped number register 384 stores the number to which the input word is mapped. Synonym number stack 386 holds the retrieved numbers from the synonym groups which contain the input word. A number of flags are provided, such as the synonym flag discussed above and a valid word flag which indicates whether the input word is in stored word list 370. Miscellaneous data 390 is temporarily stored in RAM 380 during the execution of the various routines, including, for example, a LIFO stack used in N/W mapping.

Fig. 8 shows an implementation of main thesaurus routine 362 which generally follows the steps in Fig. 2. The routine begins in box 400 by transferring an input word from word input buffer 354 to received word register 380. Then, in box 402, W/N mapping routine 364 is called to map the input word to an input number, which is stored in mapped number register 384. W/N mapping routine 364 may also return a signal indicating a mapping failure, in which case the valid flag in flags 388 is cleared. In box 404, the routine tests the valid flag. If it has been cleared, an error signal is loaded into output buffer 356 in box 406 and the routine ends.

If the input word is successfully mapped, number associating routine 366 is called in box 408. Number associating routine 366 will set the synonym flag if synonyms are found. Number associating routine 366 also loads the synonym number stack 386, and includes in it information about each group, such as part of speech information. Synonym number stack 386 may, for example, be a FIFO stack. Instead of following the steps in Fig. 2, main thesaurus routine 362 could optionally follow the steps described above in relation to Figs. 5 and 6, in which case number associating routine 366 would not set a flag, and the members of a group would be provided when a match with one of them was found.

When number associating is complete, the test in box 410 determines whether the synonym flag is set. If not, the routine loads a no synonyms signal to output buffer 356 in box 412 and ends. But if synonyms have been found, the routine begins to unload the stack to provide the synonyms themselves as output.

Each item in turn is popped from the stack in box 414. The test in box 416 then determines whether the popped item is one of the retrieved numbers or is information about a group. If a number, N/W mapping routine 368 is called in box 418. The output word which it provides is loaded to output buffer 356 in box 420. If group information is in the item popped from the stack, the part of speech and other appropriate information are loaded to output buffer 356 in box 422. The test in box 424 then determines whether the stack is empty, and, if not, another item is popped in box 414. When the stack is empty, the routine ends.

Main thesaurus routine 362 could be implemented in a number of other ways. For example, to limit the amount of temporarily stored information, N/W word mapping could be performed each time a number is retrieved from the synonym groups. In addition, the groups should be arranged within stored synonym groups 372 to minimize disk swapping during scanning. The best technique for doing so depends on the capacity of resident memory and on other features of the system.

### E. Miscellaneous

Fig. 8 refers to a thesaurus, but methods in accordance with the invention have a number of other applications. For example, they may be applied to word association problems of various kinds. A translation capability could be provided, with the user typing in an input word in one of a number of languages and the device responding with a number of groups of output words, each including the input word and synonymous words of other languages. For applications involving a highly inflected language, the inflected forms of a root word could be grouped with the root to permit retrieval of all the other forms in response to any one of the forms.

## Claims

1. A product (10; 350) comprising:
a storage medium (360) for storing data in machine-accessible form; and
word group data (44; 372) stored by the storage medium; the word group data indicating a plurality of groups of related words;
**characterized in that** the word group data comprises:
a plurality of identifier data items, each identifier data item identifying a word; the identifier data items being ordered into a sequence;
grouping data indicating group information about groups of identifier data items in the sequence, each group of identifier data items identifying a group of words; an identifier data item's position and the grouping data together indicating at least one of:
number of members of a group of words that includes the identifier data item's word;
position of identifiers of members of the group of words that includes the identifier data item's word; and
part of speech of members of a group of words that includes the identifier data item's word.

2. The product according to claim 1, **characterized in that** the groups of identifier data items are ordered in the sequence by group length; the grouping data indicating the number of groups of each length.

3. The product according to claim 2, **characterized in that** each of the identifier data items is a number; the identifier data items in each group being ordered numerically and the groups of each length being ordered numerically according to the first identifier data in each group.

4. The product according to claim 1, **characterized in that** each group of words includes words of one part of speech and the groups of identifier data items are ordered in the sequence by part of speech; the grouping data indicating positions of first and last identifier data items of each part of speech.

5. The product according to one of claims 1 to 4, further **characterized by** mapping data (36; 370) stored by the storage medium (360); the mapping data being accessible to map between a word and the word's identifier data item.

6. The product according to claim 5, **characterized in that** the mapping data maps between the words and identifier data items that together form a dense set of numbers of fixed length.

7. The product according to one of claims 1 to 6, **characterized in that** each identifier data item includes a plurality of parts, at least one part of each identifier data item having a length less than a full byte length; the full byte length being an integral multiple of each part's length so that a comparison with any of the parts can be made in a single machine cycle.

8. A method of using word group data (44; 372); the word group data indicating a plurality of groups of related words;
**characterized in that** the word group data including:
a plurality of identifier data items, each identifier data item identifying a word; the identifier data items being ordered into a sequence;
grouping data indicating group information about groups of identifier data items in the sequence, each group of identifier data items identifying a group of words; an identifier data item's position and the grouping data together indicating a feature of a group of words that includes the identifier data item's word;
the method comprising:
searching the sequence of identifier data items to find an identifier data item that matches a word's identifier; and
upon finding an identifier data item that matches, using the position of the matching identifier data item and the grouping data to obtain data relating to a group that includes the word.

9. The method according to claim 8, **characterized in that** the step of searching the sequence comprises:
obtaining the word;
using the word to obtain data indicating the word's identifier.

10. The method according to claim 8 or 9, **characterized in that** the data relating to a group that includes the word indicate a position of identifier data items in a group; the method further comprising:
using the data relating to the group to access the identifier data items in the group.

11. The method according to one of claims 8 to 10, **characterized in that** each identifier data item includes a plurality of parts, at least one part of each identifier data item having a length less than a full byte length; the full byte length being an integral multiple of each part's length so that a comparison with any of the parts can be made in a single machine cycle; the step of searching the sequence comprising:
comparing a first part of the word's identifier with a first part of an identifier data item in the sequence and, if equal, comparing a second part of the word's identifier with a second part of the identifier data items.

12. The method according to one of claims 8 to 10, **characterized in that** each identifier data item is one of a dense set of numbers; the identifier data items in each group being sorted numerically; the step of searching the sequence comprising:
comparing the word's identifier with an identifier data item in a group in the sequence; and
using the result of comparing to determine whether to skip following identifier data items in the group.

13. The method according to claim 12, **characterized in that** the groups of identifier data items in the sequence are sorted numerically by each group's first identifier; the step of searching the sequence further comprising:
comparing the word's identifier with the first identifier data item in a group in the sequence; and
using the result of comparing to determine whether to skip following groups in the sequence.

14. Apparatus comprising means for carrying out a method according to one of claims 8 to 13.

## Patentansprüche

1. Produkt (10; 350) mit:
einem Speichermedium (360) zum Speichern von Daten in maschinell zugreifbarer Form, und
Wortgruppendaten (44; 372), die durch das Speichermedium gespeichert werden, wobei die Wortgruppendaten eine Vielzahl von Gruppen von verwandten Wörtern angeben,
**dadurch gekennzeichnet, dass** die Wortgruppendaten umfassen:
eine Vielzahl von Kennzeichnungsdatenelementen, wobei jedes Kennzeichnungsdatenelement ein Wort identifiziert, wobei die Kennzeichnungsdatenelemente in eine Sequenz geordnet sind,
Gruppierungsdaten, die Gruppeninformationen zu Gruppen von Kennzeichnungsdatenelementen in der Sequenz angeben, wobei jede Gruppe von Kennzeichnungsdatenelementen eine Gruppe von Wörtern kennzeichnet und wobei die Position eines Kennzeichnungsdatenelements zusammen mit den Gruppierungsdaten wenigstens eines der Folgenden angibt:
die Anzahl von Mitgliedern einer Gruppe von Wörtern, die das Wort des Kennzeichnungsdatenelements enthält,
die Position von Kennzeichnungen von Mitgliedern der Gruppe von Wörtern, die das Wort des Kennzeichnungsdatenelements enthält, und
die Wortart von Mitgliedern einer Gruppe von Wörtern, die das Wort des Kennzeichnungsdatenelements enthält.

2. Produkt nach Anspruch 1, **dadurch gekennzeichnet, dass** die Gruppen von Kennzeichnungsdatenelementen in der Sequenz nach der Gruppenlänge geordnet sind, wobei die Gruppendaten die Anzahl von Gruppen jeder Länge angeben.

3. Produkt nach Anspruch 2, **dadurch gekennzeichnet, dass** jedes der Kennzeichnungsdatenelemente eine Zahl ist, wobei die Kennzeichnungsdatenelemente in jeder Gruppe numerisch geordnet sind und die Gruppen jeder Länge numerisch in Übereinstimmung mit der ersten Kennzeichnung in jeder Gruppe geordnet sind.

4. Produkt nach Anspruch 1, **dadurch gekennzeichnet, dass** jede Gruppe von Wörtern Wörter einer Wortart enthält und die Gruppen von Kennzeichnungsdatenelementen in der Sequenz nach Wortart geordnet sind, wobei die Gruppendaten die Positionen der ersten und letzten Kennzeichnungsdatenelemente jeder Wortart angeben.

5. Produkt nach wenigstens einem der Ansprüche 1 bis 4, weiterhin **gekennzeichnet durch** Mappingdaten (36; 370), die **durch** das Speichermedium (360) gespeichert werden, wobei auf die Mappingdaten zugegriffen werden kann, um zwischen einem Wort und dem Kennzeichnungsdatenelement des Wortes zu mappen.

6. Produkt nach Anspruch 5, **dadurch gekennzeichnet, dass** die Mappingdaten zwischen den Wörtern und Kennzeichnungsdatenelementen mappen, die zusammen einen dichten Satz von Zahlen fixer Länge bilden.

7. Produkt nach wenigstens einem der Ansprüche 1 bis 6, **dadurch gekennzeichnet, dass** jedes der Kennzeichnungsdatenelemente eine Vielzahl von Teilen enthält, wobei wenigstens ein Teil jedes Kennzeichnungsdatenelements eine Länge aufweist, die kleiner als eine vollständige Bytelänge ist, wobei die vollständige Bytelänge ein ganzzahliges Vielfaches der Länge jedes Teils ist, so dass ein Vergleich mit allen Teilen innerhalb eines einzigen Maschinenzyklus durchgeführt werden kann.

8. Verfahren zum Verwenden von Wortgruppendaten (44, 372), wobei die Wortgruppendaten eine Vielzahl von Gruppen von verwandten Wörtern angeben,
**dadurch gekennzeichnet, dass** die Wortgruppendaten enthalten:
eine Vielzahl von Kennzeichnungsdatenelementen, wobei jedes Kennzeichnungsdatenelement ein Wort identifiziert, wobei die Kennzeichnungsdatenelemente in eine Sequenz geordnet sind,
Gruppendaten, die Gruppeninformation zu Gruppen von Kennzeichnungsdatenelementen in der Sequenz angeben, wobei jede Gruppe von Kennzeichnungsdatenelementen eine Gruppe von Wörtern identifiziert, wobei die Position eines Kennzeichnungsdatenelements und die Gruppendaten zusammen ein Merkmal einer Gruppe von Wörtern angeben, die das Wort des Kennzeichnungsdatenelements enthält,
wobei das Verfahren umfasst:
Durchsuchen der Sequenz von Kennzeichnungsdatenelementen, um ein Kennzeichnungsdatenelement zu finden, das mit der Kennzeichnung eines Wortes übereinstimmt, und
nach dem Finden eines übereinstimmenden Kennzeichnungsdatenelements, Verwenden der Position des übereinstimmenden Datenelements und der Gruppendaten, um Daten zu einer Gruppe zu erhalten, die das Wort enthält.

9. Verfahren nach Anspruch 8, **dadurch gekennzeichnet, dass** der Schritt zum Durchsuchen der Sequenz umfasst:
Erhalten des Worts,
Verwenden des Wortes, um Daten zu erhalten, die die Kennzeichnung des Wortes angeben.

10. Verfahren nach Anspruch 8 oder 9, **dadurch gekennzeichnet, dass** die Daten zu einer Gruppe, die das Wort enthält, eine Position von Kennzeichnungsdatenelementen in einer Gruppe angeben, wobei das Verfahren weiterhin umfasst:
Verwenden der Daten zu der Gruppe, um auf die Kennzeichnungsdatenelemente in der Gruppe zuzugreifen.

11. Verfahren nach wenigstens einem der Ansprüche 8 bis 10, **dadurch gekennzeichnet, dass** jedes der Kennzeichnungsdatenelemente eine Vielzahl von Teilen umfasst, wobei wenigstens ein Teil jedes Kennzeichnungsdatenelements eine Länge aufweist, die kürzer als eine vollständige Bytelänge ist, wobei die vollständige Bytelänge ein ganzzahliges Vielfaches der Länge jedes Teils ist, so dass ein Vergleich mit einem der Teile innerhalb eines einzigen Maschinenzyklus vorgenommen werden kann, wobei der Schritt zum Durchsuchen der Sequenz umfasst:
Vergleichen des ersten Teils der Kennzeichnung des Wortes mit einem ersten Teil eines Kennzeichnungsdatenelements in der Sequenz, und wenn dieselben gleich sind, Vergleichen eines zweiten Teils der Kennzeichnung des Wortes mit einem zweiten Teil der Kennzeichnungsdatenelemente.

12. Verfahren nach wenigstens einem der Ansprüche 8 bis 10, **dadurch gekennzeichnet, dass** jedes Kennzeichnungsdatenelement eine aus einem dichten Satz von Zahlen ist, wobei die Kennzeichnungsdatenelemente in jeder Gruppe numerisch sortiert sind, wobei der Schritt zum Durchsuchen der Sequenz umfasst:
Vergleichen der Kennzeichnung des Wortes mit einem Kennzeichnungsdatenelement in einer Gruppe in der Sequenz, und
Verwenden des Vergleichsergebnisses, um zu bestimmen, ob die folgenden Kennzeichnungsdatenelemente in der Gruppe übersprungen werden sollen.

13. Verfahren nach Anspruch 12, **dadurch gekennzeichnet, dass** die Gruppen von Kennzeichnungsdatenelementen in der Sequenz numerisch durch die erste Kennzeichnung jeder Gruppe sortiert sind, wobei der Schritt zum Durchsuchen der Sequenz umfasst:
Vergleichen der Kennzeichnung des Wortes mit dem ersten Kennzeichnungsdatenelement in einer Gruppe in der Sequenz, und
Verwenden des Vergleichsergebnisses, um zu bestimmen, ob die folgenden Gruppen in der Sequenz übersprungen werden sollen.

14. Vorrichtung mit einer Einrichtung zum Ausführen eines Verfahrens nach wenigstens einem der Ansprüche 8 bis 13.

## Revendications

1. Produit (10 ; 350) comprenant :
un support de mémorisation (360) destiné à mémoriser des données sous une forme accessible à une machine, et
des données de groupes de mots (44 ; 372) mémorisées par le support de mémorisation, les données de groupes de mots indiquant une pluralité de groupes de mots associés,
**caractérisé en ce que** les données de groupes de mots comprennent :
une pluralité d'éléments de données d'identificateurs chaque élément de données d'identificateur identifiant un mot, les éléments de données d'identificateurs étant mis en ordre suivant une séquence,
des données de regroupement indiquant des informations de groupes concernant les groupes des éléments de données d'identificateurs dans la séquence, chaque groupe d'éléments de données d'identificateurs identifiant un groupe de mots, une position d'un élément de données d'identificateur et les données de regroupement, indiquant ensemble au moins l'un de :
un nombre d'éléments d'un groupe de mots qui comprend le mot de l'élément de données d'identificateur,
une position des identificateurs des éléments du groupe de mots qui comprend le mot de l'élément de données d'identificateur, et
une partie de prononciation des éléments d'un groupe de mots qui comprend le mot de l'élément de données d'identificateur.

2. Produit selon la revendication 1, **caractérisé en ce que** les groupes des éléments de données d'identificateurs sont mis en ordre dans la séquence par longueur de groupe, les données de regroupement indiquant le nombre des groupes de chaque longueur.

3. Produit selon la revendication 2, **caractérisé en ce que** chacun des éléments de données d'identificateurs est un nombre, les éléments de données d'identificateurs de chaque groupe étant mis en ordre numériquement et les groupes de chaque longueur étant mis en ordre numériquement conformément aux données du premier identificateur de chaque groupe.

4. Produit selon la revendication 1, **caractérisé en ce que** chaque groupe de mots comprend des mots d'une partie de prononciation et les groupes des éléments de données d'identificateurs sont mis en ordre dans la séquence par partie de prononciation, les données de regroupement indiquant des positions des premier et dernier éléments de données d'identificateurs de chaque partie de prononciation.

5. Produit selon l'une des revendications 1 à 4, **caractérisé en outre par** des données de mappage (36 ; 370) mémorisées par le support de mémorisation (360 ), les données de mappage étant accessibles pour exécuter un mappage entre un mot et l'élément de données d'identificateur du mot.

6. Produit selon la revendication 5, **caractérisé en ce que** les données de mappage réalisent une mappe entre les mots et des éléments de données d'identificateurs qui forment ensemble un ensemble dense de nombres de longueur fixe.

7. Produit selon l'une des revendications 1 à 6, **caractérisé en ce que** chaque élément de données d'identificateur comprend une pluralité de parties, au moins une partie de chaque élément de données d'identificateur présentant une longueur inférieure à une longueur d'un octet entier, la longueur d'un octet entier étant un multiple entier de la longueur de chaque partie de sorte qu'une comparaison avec l'une quelconque des parties peut être faite en un seul cycle de machine.

8. Procédé d'utilisation des données de groupes de mots (44 ; 372), les données de groupes de mots indiquant une pluralité de groupes de mots associés,
**caractérisé en ce que** les données de groupes de mots comprennent :
une pluralité d'éléments de données d'identificateurs, chaque élément de données d'identificateur identifiant un mot, les éléments de données d'identificateurs étant mis en ordre en une séquence,
des données de regroupement indiquant des informations de groupes concernant les groupes des éléments de données d'identificateurs dans la séquence, chaque groupe d'éléments de données d'identificateurs identifiant un groupe de mots, une position d'un élément de données d'identificateur et les données de regroupement indiquant ensemble une caractéristique d'un groupe de mots qui comprend le mot de l'élément de données d'identificateur,
le procédé comprenant :
une recherche dans la séquence des éléments de données d'identificateurs pour trouver un élément de données d'identificateur qui correspond à un identificateur d'un mot, et
lors de la découverte d'un élément de données d'identificateur qui correspond, l'utilisation de la position de l'élément de données d'identificateur correspondant et des données de regroupement pour obtenir des données se rapportant à un groupe qui comprend le mot.

9. Procédé selon la revendication 8, **caractérisé en ce que** l'étape de recherche dans la séquence comprend :
l'obtention du mot,
l'utilisation du mot pour obtenir des données indiquant l'identificateur du mot.

10. Procédé selon la revendication 8 ou 9, **caractérisé en ce que** les données se rapportant à un groupe qui comprend le mot indiquent une position des éléments de données d'identificateurs dans un groupe, le procédé comprenant en outre :
l'utilisation des données se rapportant au groupe pour accéder aux éléments de données d'identificateurs dans le groupe.

11. Procédé selon l'une des revendications 8 à 10, **caractérisé en ce que** chaque élément de données d'identificateur comprend une pluralité de parties, au moins une partie de chaque élément de données d'identificateur présentant une longueur inférieure à une longueur d'un octet entier, la longueur d'un octet entier étant un multiple entier de la longueur de chaque partie de sorte qu'une comparaison avec l'une quelconque des parties peut être faite en un seul cycle de la machine, l'étape de recherche dans la séquence comprenant :
une comparaison d'une première partie de l'identificateur du mot avec une première partie d'un élément de données d'identificateur dans la séquence et, si elles sont égales, la comparaison d'une seconde partie de l'identificateur du mot avec une seconde partie des éléments de données d'identificateur.

12. Procédé selon l'une des revendications 8 à 10, **caractérisé en ce que** chaque élément de données d'identificateur est un nombre d'un ensemble dense de nombres, les éléments de données d'identificateurs de chaque groupe étant triés numériquement, l'étape de recherche dans la séquence comprenant :
la comparaison de l'identificateur du mot avec un élément de données d'identificateur dans un groupe de la séquence, et
l'utilisation du résultat de la comparaison pour déterminer s'il faut sauter les éléments de données d'identificateurs suivants du groupe.

13. Procédé selon la revendication 12, **caractérisé en ce que** les groupes des éléments de données d'identificateurs dans la séquence sont triés numériquement selon le premier identificateur de chaque groupe, l'étape de recherche dans la séquence comprenant en outre :
la comparaison de l'identificateur du mot avec le premier élément de données d'identificateur dans un groupe de la séquence, et
l'utilisation du résultat de la comparaison pour déterminer s'il faut sauter les groupes suivants dans la séquence.

14. Dispositif comprenant un moyen destiné à exécuter un procédé selon l'une des revendications 8 à 13.
